# EUROPEAN PATENT APPLICATION

(11) **EP 2 811 393 A1**
(43) Date of publication of application: **10.12.2014**
(21) Application number: 13742999.9
(22) Date of filing: 23.01.2013
(51) Int. Cl.: G06F 3/06, G06F 3/08

(54) **MOUNTING METHOD IN ELECTRONIC DEVICE**

(30) Priority: 31.01.2012 JP 2012017634
(71) Applicant: Kyocera Document Solutions Inc., Osaka-shi, Osaka 540-8585 (JP)
(72) Inventor: SUZUKI Masahiro, Osaka-shi Osaka 540-8585 (JP)
(74) Representative: Schäfer, Matthias W.
(86) International application number: PCT/JP2013/051274
(87) International publication number: WO 2013/115028

(57) **Abstract**

An MTD number identifying unit 43 is established to identify an MTD number of a block from a name of the block; in an application 32, a block to be mounted is specified with a name of the physical partition or the logical volume; and the application 32 identifies an MTD number of a block to be mounted from its name using the MTD number identifying unit 43, and causes a mount processing unit 44 to perform mounting with specifying the identified MTD number.

## Description

### Technical Field

The present invention relates to an electronic apparatus, an image forming apparatus, an application program, and a mounting method.

### Background Art

Recently, an electronic apparatus such as an image forming apparatus often includes a built-in embedded system and uses a flash memory as a storage device.

For example, using an MTD (Memory Technology Device) driver, such an electronic apparatus handles an MTD device such as a flash memory chip as a storage. Further, UBI is proposed as a technique for managing an MTD device (for example, see NON-PATENT LITERATURE #1). The UBI is a system that performs mapping between a physical block and a logical block, wear leveling, and the like.

### Citation list

### Non-patent literature

NON-PATENT LITERATURE #1: UBI - Unsorted Block Images, Thomas Gleixner et al., International Business Machines Corp., 2006.

### Summary of invention

### Technical problem

In Linux (trademark), as mentioned below, using the UBI system, a logical volume is managed and a logical volume is mounted.

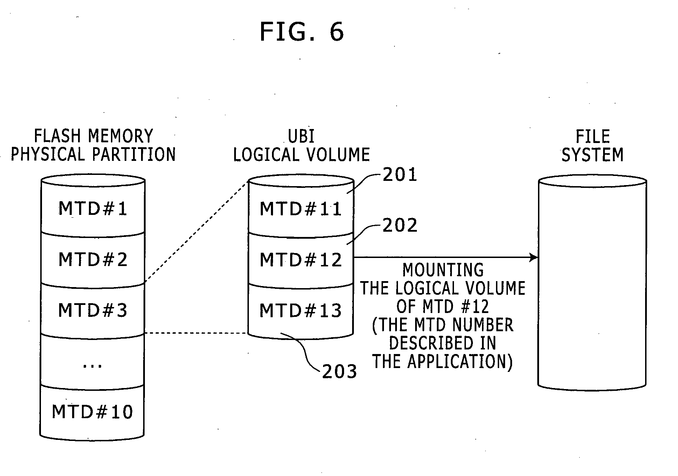

As shown in Fig. 6, the UBI system assigns logical volumes to physical partitions in a flash memory. Unique MTD numbers are assigned to the physical partitions in the flash memory and the logical volumes of UBI.

The MTD numbers are set as serial numbers that continues along the physical partitions in the flash memory and the logical volumes of UBI. For example, as shown in Fig. 6, where the MTD numbers of physical partitions in a flash memory are 1 to 10, the MTD numbers of 11 to 13 are assigned to logical volumes 201 to 203 of UBI. When a logical volume of UBI is mounted to a file system, the logical volume of UBI is mounted with specifying its MTB number.

For example, if an application is coded so as to mount a specific logical volume 202, the application mounts the logical volume 202 with specifying its MTD number "12".

The MTD number is properly reassigned correspondingly to a change (adding, deleting, or the like) in physical partitions and logical volumes. Such logical volumes are increased or decreased in accordance with specification change of the electronic apparatus or increase or decrease of applications installed in the electronic apparatus. Therefore, for example, when the logical volume 201 is deleted, the MTD number of the logical volume 202 is changed to "11", and the MTD number of the logical volume 203 is changed to "12".

If the logical volume 201 has been deleted, since the aforementioned application mounts the logical volume with specifying the MTD number of "12", the application mounts the logical volume 203 in error rather than the logical volume 202. To avoid such a trouble, it is required to change the application and update the application in the electronic apparatus.

The present invention has been made in view of the aforementioned problem, and it is an object of the present invention to obtain an electronic apparatus, an image forming apparatus, an application program, and a mounting method capable of mounting a physical partition or a logical volume from an application without changing the application even if physical partitions and/or logical volumes that serial numbers such as MTD numbers are assigned to are increased or decreased.

### Solution to problem

An electronic apparatus according to an aspect of the present invention includes one or more built-in non volatile memories; a logical volume managing unit that assigns one or more logical volumes to a physical partition in said one or more non volatile memories; a block managing unit that dynamically assigns continuous serial numbers to physical partitions and said one or more logical volumes; a mount processing unit that mounts the physical partition or the logical volume specified with the serial number; a serial number identifying unit that identifies the serial number of the physical partition or the logical volume from a name of the physical partition or the logical volume; and an application that where the physical partition or the logical volume to be mounted is specified with a name of the physical partition or the logical volume, when performing mounting, identifies the serial number of the physical partition or the logical volume to be mounted using the serial number identifying unit from the name, and causes the mount processing unit to perform mounting with specifying the identified serial number.

Consequently, even if physical partitions and/or logical volumes that serial numbers such as MTD numbers are assigned to are increased or decreased, a physical partition or a logical volume can be properly mounted from an application without changing the application.

An image forming apparatus according to an aspect of the present invention includes one or more built-in non volatile memories; a logical volume managing unit that assigns one or more logical volumes to a physical partition in said one or more non volatile memories; a block managing unit that dynamically assigns continuous serial numbers to physical partitions and said one or more logical volumes; a mount processing unit that mounts the physical partition or the logical volume specified with the serial number; a serial number identifying unit that identifies the serial number of the physical partition or the logical volume from a name of the physical partition or the logical volume; an application that where the physical partition or the logical volume to be mounted is specified with a name of the physical partition or the logical volume, when performing mounting, identifies the serial number of the physical partition or the logical volume to be mounted using the serial number identifying unit from the name, and causes the mount processing unit to perform mounting with specifying the identified serial number; and a built-in memory connector capable of attachment and detachment of a non volatile memory for storing received facsimile data, the non volatile memory added as one of said one or more built-in non volatile memories in accordance with having a facsimile receiving function.

Consequently, regardless of whether a non volatile memory exists for storing received facsimile data or not, a physical partition or a logical volume can be properly mounted from an application without changing the application. Therefore, an application can be commonly used to machine types: one machine type equipped with a non volatile memory for storing received facsimile data and another machine type not equipped with a non volatile memory for storing received facsimile data.

An application program according to an aspect of the present invention includes a description of a name of a physical partition or a logical volume to specify the physical partition or the logical volume to be mounted in an electronic apparatus that assigns one or more logical volumes to physical partitions in one or more non volatile memories and dynamically assigns continuous serial numbers to the physical partitions and said one or more logical volumes. Further, this program causes a computer built in the electronic apparatus to perform the steps of: identifying the serial number of the physical partition or the logical volume from a name of the physical partition or the logical volume when performing mounting; and causing to perform mounting with specifying the identified serial number.

Consequently, even if physical partitions and/or logical volumes that serial numbers such as MTD numbers are assigned to are increased or decreased, a physical partition or a logical volume can be properly mounted from an application without changing the application (i.e. this application program).

A mounting method according to an aspect of the present invention includes the steps of: assigning one or more logical volumes to a physical partition in one or more built-in non volatile memories; dynamically assigning continuous serial numbers to physical partitions and said one or more logical volumes; identifying the serial number of the physical partition or the logical volume from the name of the physical partition or the logical volume when performing mounting in accordance with a request from an application in which the physical partition or the logical volume to be mounted is specified with a name of the physical partition or the logical volume; and performing mounting with specifying the identified serial number.

Consequently, even if physical partitions and/or logical volumes that serial numbers such as MTD numbers are assigned to are increased or decreased, a physical partition or a logical volume can be properly mounted from an application without changing the application.

### Advantageous effect of invention

According to the present invention, in an electronic apparatus, even if physical partitions and/or logical volumes that serial numbers such as MTD numbers are assigned to are increased or decreased, a physical partition or a logical volume can be properly mounted from an application without changing the application.

These and other objects, features and advantages of the present invention will become more apparent upon reading of the following detailed description along with the accompanied drawings.

### Brief description of drawings

Fig. 1 shows a block diagram that indicates a configuration of an image forming apparatus according to an embodiment of the present invention;
Fig. 2 shows a flowchart that explains a mounting process performed when starting an application in Fig. 1;
Fig. 3 shows a diagram that indicates an example of a structure of physical partitions and logical volumes in the image forming apparatus shown in Fig. 1;
Fig. 4 shows a diagram that indicates a structure obtained by removing a logical volume 63 in the structure of physical partitions and logical volumes shown in Fig. 3;
Fig. 5 shows a diagram that indicates a structure obtained by removing a physical partition 71 in the structure of physical partitions and logical volumes shown in Fig. 3;
Fig. 6 shows a diagram that indicates an example of a structure of physical partitions and logical volumes; and

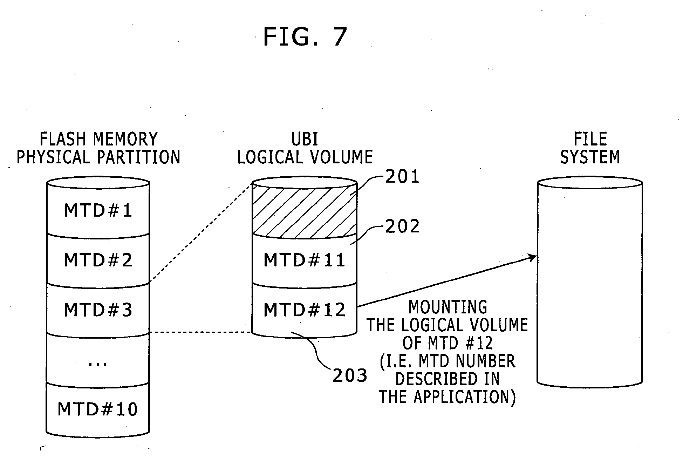

Fig. 7 shows a diagram that indicates a structure obtained by removing a logical volume 201 in the structure of physical partitions and logical volumes shown in Fig. 6.

### Description of embodiments

Hereinafter, an embodiment of the present invention will be explained with reference to drawings.

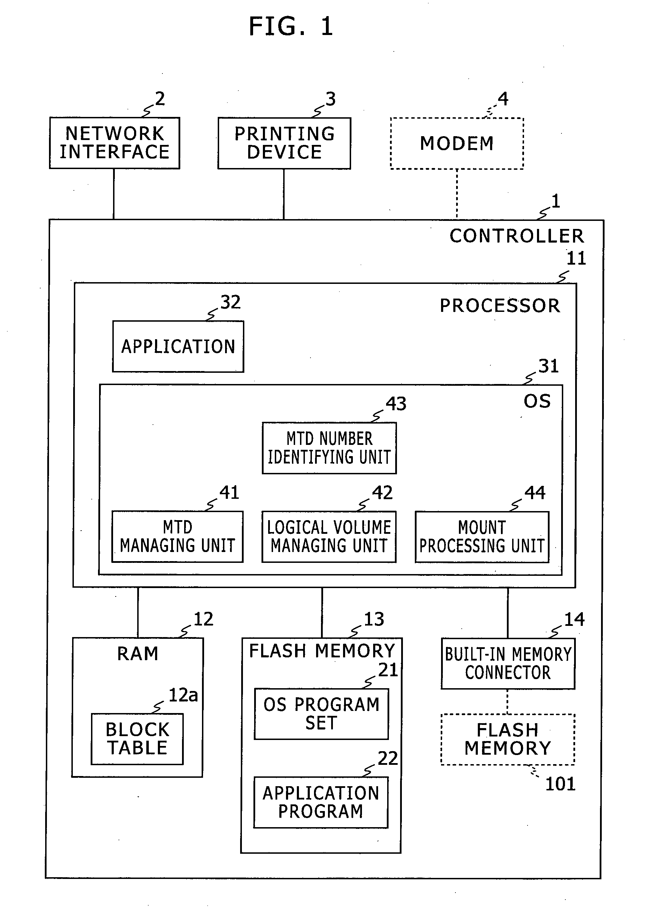

Fig. 1 shows a block diagram that indicates a configuration of an image forming apparatus according to an embodiment of the present invention. This image forming apparatus is a sort of an electronic apparatus that includes an embedded system. The image forming apparatus shown in Fig. 1 is a printer, a multi function peripheral or the like, and includes a controller 1, a network interface 2, and a printing device 3.

The controller 1 is connected to the network interface 2, the printing device 3 and the like, and executes a print job on the basis of a print request. The controller 1 is configured as a computer, ASIC (Application Specific Integrated Circuit), and/or the like. The network interface 2 is a communication device that performs communication through a network with an unshown host device. For example, the network interface 2 receives print data described in a page description language as a print request from an unshown host device. The printing device 3 is provided print image data from the controller 1, performs sorts of processes (e.g. half toning) for the print image data, and performs printing on the basis of the processed data.

The controller 1 includes a processor 11, a RAM (Random Access Memory) 12, a flash memory-13, and a built-in memory connector 14.

The processor 11 is a computer that includes a CPU (Central Processing Unit), an ASIC or the like, and embodies processing units that perform sorts of processes. For example, the processor 11 loads an operating system program set 21, an application program 22 or the like stored in the flash memory 13 to the RAM 12, and executes it. The RAM 12 is a volatile storage device that temporarily stores sorts of data related to a process performed by the processor 11.

The flash memory 13 is a built-in flash memory fixed in the controller 1, and is a non volatile memory that stores sorts of data and a program to be executed by the processor 11. For example, a NAND flash memory is used as the flash memory 13.

The image forming apparatus shown in Fig. 1 includes a modem 4 if the machine type thereof has a facsimile receiving function. If the controller 1 is configured on one circuit board and installed in a machine type having a facsimile receiving function, a flash memory 101 to store received facsimile data (i.e. FAXDIMM) is connected to the built-in memory connector 14. The built-in memory connector 14 is a memory slot capable of attachment and detachment of the flash memory 101. For example, a NAND flash memory is used as the flash memory 101. When the flash memory 101 is connected, one or more physical partitions is/are assigned to the flash memory 101, and therefore, there are much physical partitions than those in a case that the flash memory 101 is not connected.

An operating system 31 is embodied by executing the operating system program set 21 in the processor 11. The operating system 31 includes an unshown kernel and sorts of drivers. Here the operating system 31 includes an MTD managing unit 41, a logical volume managing unit 42, an MTD number identifying unit 43, and a mount processing unit 44.

The MTD managing unit 41 makes physical partitions in the flash memory 13 or the flash memories 13 and 101, and dynamically assigns continuous MTD (Memory Technology Devices) numbers to the physical partitions in the flash memory 13 or the flash memories 13 and 101 and logical volumes managed by the logical volume managing unit 42. In this embodiment, the MTD managing unit 41 is embodied with an MTD driver.

The logical volume managing unit 42 assigns one or more logical volumes to a specific physical partition in the flash memory 13 or the flash memories 13 and 101. In this embodiment, the logical volume managing unit 42 is a UBI (Unsorted Block Images) system. Therefore, the logical volume in this embodiment is a UBI logical volume.

It should be noted that when starting, the MTD managing unit 41 generates a block table 12a on the basis of a structure of the logical volumes and the physical partitions in the flash memory 13 or the flash memories 13 and 101 and stores the block table 12a in the RAM 12. The block table 12a includes, for each block (physical partition or logical volume), a record that indicates a relationship between an MTD number and a name of the block. The MTD managing unit 41 updates the block table 12a when performing assignment of the MTD number. Further, when a new logical volume is added, the logical volume managing unit 42 adds a new record of the added logical volume to the block table 12a.

The MTD number identifying unit 43 identifies an MTD number of a physical partition or a logical volume from a name of the physical partition or the logical volume with referring to the block table 12a.

The mount processing unit 44 mounts a physical partition or a logical volume specified with an MTD number to a file system.

Further, an application 32 is embodied by executing the application program 22 in the processor 11. The application 32 embodies a function of this image forming apparatus, and for example, the application 32 for a print job performs image processing for image data of a document to be printed, control of the printing device 3, and the like.

Further, the application 32 mounts a memory area required for its own function in its initialization process using the mount processing unit 44 in the operating system 31. In the application 32, a physical partition or a logical volume to be mounted is specified with a name of the physical partition or the logical volume, and when performing mounting, the application 32 identifies the MTD number of the physical partition or the logical volume to be mounted using the MTD number identifying unit 43 from the name, and causes the mount processing unit 44 to perform mounting with specifying the identified MTD number.

Specifically, in the application program 22, a name of a physical partition or a logical volume is described, a function call for the MTD number identifying unit 43 is described with the name of the physical partition or the logical volume as an argument, and further, with an argument that is the MTD number identified from a return value of this function, a function call for the mount processing unit 44 is described.

In this manner, in the application program 22, the MTD number of the physical partition or the logical volume to be mounted is not described, and the MTD number of the physical partition or the logical volume to be mounted is dynamically acquired from the name of the physical partition or the logical volume to be mounted when performing mounting.

The MTD managing unit 41 dynamically assigns different MTD numbers to the logical volume in accordance with whether the flash memory 101 is connected to the built-in memory connector 14 or not. However, since the MTD number identifying unit 43 identifies the serial number at the timing when performing mounting from the name of the physical partition or the logical volume, the physical partition or the logical volume to be mounted is uniquely identified from the name of the physical partition or the logical volume.

Further, the MTD managing unit 41 reassigns an MTD number to the logical volume when adding and/or deleting a logical volume among the logical volumes managed by the logical volume managing unit 42. Thus, an MTD number assigned to a logical volume is sometime changed. However, since the MTD number identifying unit 43 identifies the serial number at the timing when performing mounting from the name of the physical partition or the logical volume, the physical partition or the logical volume to be mounted is uniquely identified from the name of the physical partition or the logical volume.

The following part explains a behavior of the aforementioned image forming apparatus.

The MTD managing unit 41 dynamically assigns MTD numbers to physical partitions and logical volumes. Therefore, due to increasing or decreasing logical volumes and physical partitions in the flash memory 13 or the flash memories 13 and 101, the MTD numbers of existent physical partitions and logical volumes are sometime changed.

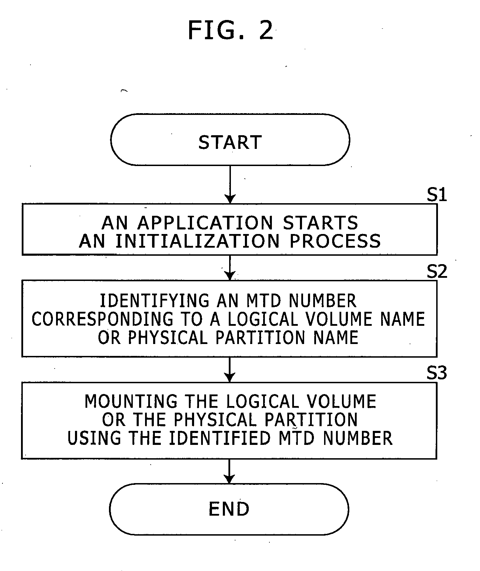

Fig. 2 shows a flowchart that explains a mounting process performed when starting the application 32 in Fig. 1. When this image forming apparatus starts, the operating system 31 performs an initialization process and the application 32 that embodies sorts of functions performs an initialization process.

After starting the initialization process (in Step S1), the application 32 identifies an MTD number of a logical volume or a physical partition to be mounted from a name of the logical volume or the physical partition to be mounted using the MTD number identifying unit 43 (in Step S2).

Subsequently, the application 32 mounts a logical volume or a physical partition to which the identified MTD number is assigned using the mount processing unit 44 (in Step S3).

In this manner, the application 32 specifies a logical volume or a physical partition to be mounted with its unique name, and therefore, even if the MTD number assigned thereto is dynamically changed, the logical volume or the physical partition to be mounted can be properly mounted.

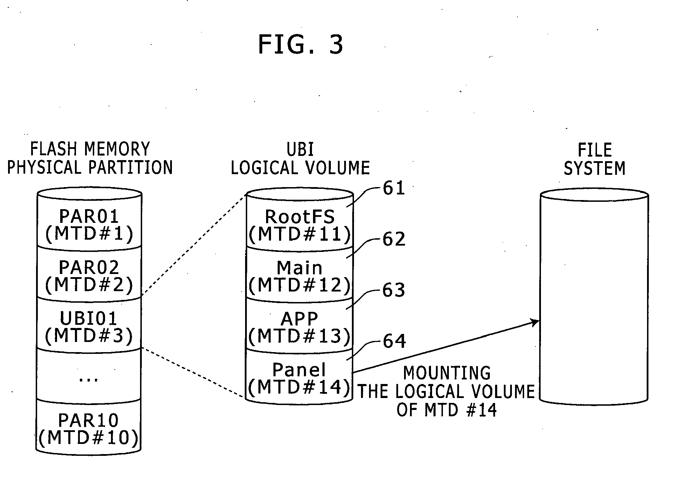

Fig. 3 shows a diagram that indicates an example of a structure of physical partitions and logical volumes in the image forming apparatus shown in Fig. 1. In Fig. 3, there are ten physical partitions, and four logical volumes 61 to 64 are assigned to the physical partition with the name "UBI01".

When a process to mount the logical volume 64 with the name "Panel" is described in the application 32, according to the structure shown in Fig. 3, in the initialization process, the application 32 acquires the MTD number "14" of the logical volume with the name "Panel" using the MTD number identifying unit 43, and causes the mount processing unit 44 to mount the logical volume 64 with specifying the MTD number "14".

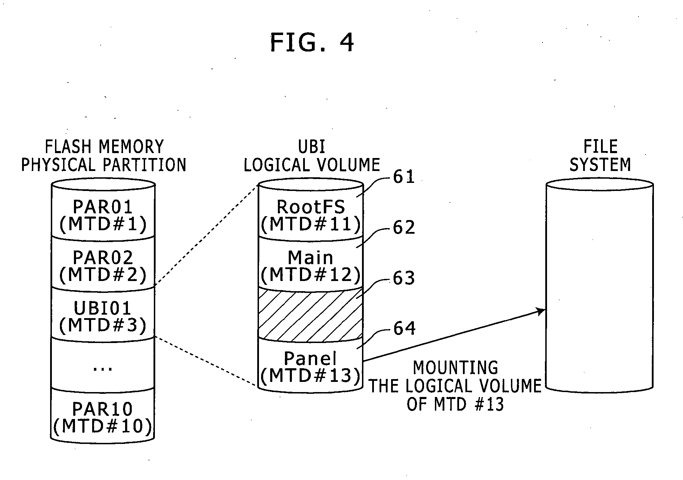

Fig. 4 shows a diagram that indicates a structure obtained by removing a logical volume 63 in the structure of physical partitions and logical volumes shown in Fig. 3. As shown in Fig. 4, if there is not the logical volume 63, the MTD number "13" is assigned to the logical volume 64 with the name "Panel". In the initialization process, the application 32 acquires the MTD number "13" of the logical volume with the name "Panel" using the MTD number identifying unit 43, and causes the mount processing unit 44 to mount the logical volume 64 with specifying the MTD number "13".

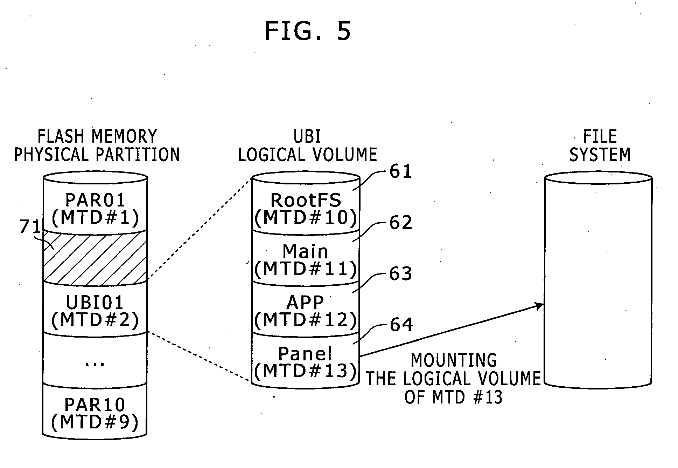

Fig. 5 shows a diagram that indicates a structure obtained by removing a physical partition 71 in the structure of physical partitions and logical volumes shown in Fig. 3. As shown in Fig. 5, if there is not the physical partition 71, the MTD number "13" is assigned to the logical volume 64 with the name "Panel". In the initialization process, the application 32 acquires the MTD number "13" of the logical volume with the name "Panel" using the MTD number identifying unit 43, and causes the mount processing unit 44 to mount the logical volume 64 with specifying the MTD number "13".

As mentioned, in the aforementioned embodiment, the MTD managing unit 41 dynamically assigns continuous MTD numbers to physical partitions in the flash memory 13 or the flash memories 13 and 101 and logical volumes managed by the logical volume managing unit 42. In addition, the mount processing unit 44 in the operating system 31 mounts a physical partition or a logical volume specified with an MTD number.

In such an environment, the MTD number identifying unit 43 is established' to identify an MTD number of a physical partition or a logical volume from a name of the physical partition or the logical volume; in the application 32, a physical partition or a logical volume to be mounted is specified with a name of the physical partition or the logical volume; and the application 32 identifies an MTD number of a physical partition or a logical volume to be mounted from its name using the MTD number identifying unit 43, and causes the mount processing unit 44 to perform mounting with specifying the identified MTD number.

Consequently, even if a change occurs among physical partitions and/or logical volumes to which MTD numbers are assigned, it is possible to properly mount a physical partition or a logical volume from the application 32 without changing the application (i.e. the application program 22).

It should be noted that the aforementioned embodiment is a favorable example of the present invention and has been presented for purposes of illustration and description, and is not intended to be exhaustive nor to limit the present invention.

For example, in the aforementioned embodiment, the flash memory 13 may be configured with plural memory chips. As well, the flash memory 101 may be configured with plural memory chips.

Further, in the aforementioned embodiment, a NOR flash memory may be used as the flash memory 13 or 101.

Furthermore, in the aforementioned embodiment, the application program 22 is capable of being recorded in a portable and computer-readable recording medium. It is possible to install the application program 22 in the controller 1 from such a recording medium.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

### Industrial applicability

For example, the present invention is applicable to an image forming apparatus such as a facsimile machine or a multi function peripheral.

## Claims

1. An electronic apparatus, comprising:
one or more built-in non volatile memories;
a logical volume managing unit that assigns one or more logical volumes to a physical partition in said one or more non volatile memories;
a block managing unit that dynamically assigns continuous serial numbers to physical partitions and said one or more logical volumes;
a mount processing unit that mounts the physical partition or the logical volume specified with the serial number;
a serial number identifying unit that identifies the serial number of the physical partition or the logical volume from a name of the physical partition or the logical volume; and
an application that where the physical partition or the logical volume to be mounted is specified with a name of the physical partition or the logical volume, when performing mounting, identifies the serial number of the physical partition or the logical volume to be mounted using the serial number identifying unit from the name, and causes the mount processing unit to perform mounting with specifying the identified serial number.

2. The electronic apparatus according to claim 1, further comprising a built-in memory connector capable of attachment and detachment of a non volatile memory added as one of said one or more built-in non volatile memories;
wherein the block managing unit assigns different serial numbers to the logical volume in accordance with whether a non volatile memory is connected to the built-in memory connector or not; and
the serial number identifying unit identifies the current serial number from the name of the physical partition or the logical volume when performing mounting.

3. The electronic apparatus according to claim 1, wherein:
the block managing unit reassigns the serial number to the logical volume when adding and/or deleting a logical volume among said one or more logical volumes; and
the serial number identifying unit identifies the current serial number from the name of the physical partition or the logical volume when performing mounting.

4. The electronic apparatus according to claim 1, wherein:
the block managing unit manages said one or more non volatile memories as one or more MTD devices, and assigns MTD numbers as the serial numbers to the physical partitions and said one or more logical volumes;
the serial number identifying unit identifies the MTD number of the physical partition or the logical volume from a name of the physical partition or the logical volume; and
the mount processing unit mounts the physical partition or the logical volume specified with the MTD number.

5. The electronic apparatus according to claim 4, wherein said one or more logical volumes assigned by the logical volume managing unit is/are one or more UBI logical volumes.

6. The electronic apparatus according to claim 1, wherein said one or more non volatile memory is/are one or more NAND flash memories.

7. An image forming apparatus, comprising:
one or more built-in non volatile memories;
a logical volume managing unit that assigns one or more logical volumes to a physical partition in said one or more non volatile memories;
a block managing unit that dynamically assigns continuous serial numbers to physical partitions and said one or more logical volumes;
a mount processing unit that mounts the physical partition or the logical volume specified with the serial number;
a serial number identifying unit that identifies the serial number of the physical partition or the logical volume from a name of the physical partition or the logical volume;
an application that where the physical partition or the logical volume to be mounted is specified with a name of the physical partition or the logical volume, when performing mounting, identifies the serial number of the physical partition or the logical volume to be mounted using the serial number identifying unit from the name, and causes the mount processing unit to perform mounting with specifying the identified serial number; and
a built-in memory connector capable of attachment and detachment of a non volatile memory for storing received facsimile data, the non volatile memory added as one of said one or more built-in non volatile memories in accordance with having a facsimile receiving function.

8. An application program, comprising a description of a name of a physical partition or a logical volume to specify the physical partition or the logical volume to be mounted in an electronic apparatus that assigns one or more logical volumes to physical partitions in one or more non volatile memories and dynamically assigns continuous serial numbers to the physical partitions and said one or more logical volumes; and causing a computer built in the electronic apparatus to perform the steps of:
identifying the serial number of the physical partition or the logical volume from a name of the physical partition or the logical volume when performing mounting; and
causing to perform mounting with specifying the identified serial number.

9. A mounting method that mounts a physical partition or a logical volume specified with a serial number, comprising the steps of:
assigning one or more logical volumes to a physical partition in one or more built-in non volatile memories;
dynamically assigning continuous serial numbers to physical partitions and said one or more logical volumes;
identifying the serial number of the physical partition or the logical volume from the name of the physical partition or the logical volume when performing mounting in accordance with a request from an application in which the physical partition or the logical volume to be mounted is specified with a name of the physical partition or the logical volume; and
performing mounting with specifying the identified serial number.
